# EUROPEAN PATENT SPECIFICATION

(11) **EP 1 197 378 B1**
(45) Date of publication and mention of the grant of the patent: **04.01.2006**
(21) Application number: 01122934.1
(22) Date of filing: 25.09.2001
(51) Int. Cl.: B60N 2/28

(54) **Construction for fixing child seat to vehicle**
Konstruktion zum Anbringen eines Kindersitzes an einem Fahrzeug
Construction pour la fixation d'un siège d'enfant à un véhicule

(30) Priority: 27.09.2000 JP 2000294288
(43) Date of publication of application: 17.04.2002
(73) Proprietor: Daihatsu Motor Co., Ltd., Ikeda-shi, Osaka (JP)
(72) Inventor: Adachi, Futoshi, Ikeda-shi, Osaka (JP); Sawada, Yoshinori, Ikeda-shi, Osaka (JP); Nomura, Hidemasa, Ikeda-shi, Osaka (JP)
(74) Representative: Petersen, Frank

(56) References cited:
- DE-A- 3 422 695
- DE-C- 19 850 255
- DE-U- 29 814 444
- GB-A- 2 322 542

## Description

### BACKGROUND OF THE INVENTION

### 1. FIELD OF THE INVENTION

The present invention relates to a construction for fixing a child's seat to a vehicle such as a passenger car or a commercial car according to the preamble part of the main claim (see, for example, DE-C-198 50 255).

### 2. DESCRIPTION OF THE RELATED ART

The typical earlier type of construction utilizes a seat belt equipped with a seat of the vehicle for fixing the child seat. A more recent and popular construction provides the child seat with a fixed portion and provides also the vehicle seat with a corresponding fixing portion such constructions are e.g. known from the above-mentioned DE-C-198 50 255, GB-A-2 322 542 or are standardized as "ISO-FIX model") so as to fix the child seat with the vehicle seat through engagement between the fixed portion of the former and the fixing portion of the latter.

With the above conventional types of constructions, however, the constructions allow fixing of the child seat to the vehicle seat regardless of the position of the vehicle seat in case this vehicle seat is adjustable in position in the forward and rear direction.

Accordingly, if the child seat is fixed to a rear seat of the vehicle when the latter is located at the forward position thereof, the distance between this fixed child seat and the front seat of the vehicle will be small. Then, in the case especially of a strong shock applied from the front side of the vehicle, the space in front of the child seat can be insufficient for protection against the shock.

In view of the above, a primary object of the present invention is to provide a construction for fixing a child seat to a vehicle, which construction allows sufficient space in front of the fixed child seat sufficient for protection against strong shock from the vehicle front.

### SUMMARY OF THE INVENTION

According to the present invention, in a construction for fixing a child seat to a vehicle according to the appending main claim, the construction allows fixing of the child seat to a vehicle seat only when the vehicle seat is located at its rear position.

With the child seat fixing construction of the invention, the child seat cannot be fixed to the vehicle seat when the vehicle seat is located at its forward or intermediate position. Then, when a strong shock is applied from the front side of the vehicle, a sufficient space is ensured in front of the fixed child seat.

Further, because of this sufficient space ensured in front of the child seat, the construction achieves improvement of comfort for an infant seated in the child seat.

The construction includes a fixed portion provided on the child seat and a fixing portion provided on a floor of the vehicle, the fixing portion being fixedly connectable with the fixed portion.

With this feature, for instance, when the vehicle seat is set at its forward position, the fixed portion of the child seat cannot be fixed to the fixing portion on the vehicle floor. Hence, the user cannot but notice that the vehicle seat is not set at its rear position. Then, the user will move the vehicle seat to the rear position and connect the fixed portion of the child seat to the fixing portion. Thereafter, the user can have an infant seated in the properly fixed child seat.

Further, after the vehicle seat is moved to the rear position, the sufficient space is reserved e.g. from the front vehicle seat, which sufficient space facilitates the connecting and disconnecting operations between the fixed portion the child seat and the fixing portion of the vehicle seat.

Incidentally, according to conventional constructions, the fixing portion to be connected with the fixed portion of the child seat is often provided on the vehicle seat. In this case, when a strong shock is applied from the front side of the vehicle, the resultant inertia in the forward and rear direction effective on the child seat is applied via the fixing portion to the vehicle seat. Therefore, it is necessary to provide the vehicle seat with reinforcement sufficient to endure this inertia in the forward and rear direction effective on the child seat. On the other hand, as the vehicle seat is mounted to be movable in the forward and rear direction, in order to provide sufficient reinforcement in the vehicle seat, it becomes necessary to provide reinforcement at many portions such as the fixing means between the vehicle seat and its fixing portion, the support frame for the vehicle seat, the slide rails movably supporting the vehicle seat, etc.

With the above-described feature of the invention, however, because the fixing portion is provided on the vehicle floor, when a strong shock is applied from the front side of the vehicle, the inertia effective on the child seat in the forward and rear direction is applied via the fixing portion not to the vehicle seat, but to the vehicle floor. Therefore, even if some reinforcement is needed, this is needed only in the vehicle floor, requiring only simple design change. Further, as is well-known, the floor of a vehicle is originally provided with higher strength than the seats of the vehicle. Its reinforcement can be very simple and easy.

The fixing portion is provided in a support member which is detachably attachable to the vehicle floor.

That is, in the case of the conventional construction in which the fixing portion is provided in the vehicle seat, it is necessary to manufacture two types of vehicle seats, one having the fixing portion and the other not having it. This is disadvantageous in terms of production efficiency. Also, when the child seat becomes necessary later, the user needs to replace the vehide seat by the other type having the fixing portion. This is economically disadvantageous for the user.

On the other hand, with the above-described feature of the present invention, when use and attachment of a child seat become necessary, the user only has to install the support member having the fixing portion on the vehicle floor. There is no necessity for the manufacture to provide two types of vehicle seats. And, for the user, when the child seat becomes unnecessary later, the user can uninstall the support member from the vehicle floor at anytime desired. Moreover, for the vehicle manufacturer's side, the installment of the support member with the fixing portion on the floor can be done easily at any appropriate time such as during the manufacture of the vehicle, after the manufacture or after shipment of the finished vehicle.

Incidentally, in many cases, the child seat is provided with a pair of right and left fixed portions. Also, when the vehicle seat has a width extending substantially over the entire inner width of the vehicle, it is necessary to provide a plurality of fixing portions spaced apart in the right and left directions with a predetermined space therebetween so as to allow the child seat to be selectively fixed to the right or left side of the elongate vehicle seat.

Then, with the above-described feature of the present invention, if the support member is provided with a plurality of fixing portions, then, by installing this support member with multiple fixing portions on the vehicle floor, the plurality of fixing portions can be mounted to the floor component at one time via the support member.

According to the feature of the invention relating to claim 3, as described above, the support member is detachably attachable to the vehicle floor. Then, by providing a plurality of fixing portions to this support member, these fixing portions can be provided at one time on the vehicle floor, so that the attaching and detaching operations can be done easily.

Advantageously, the fixing portion is movable to a position connectable with the fixed portion of the child seat mounted on the vehicle seat in association with a movement of the vehicle seat to the rear position.

With this, it becomes possible to reduce the possibility of the user's attempting to fix the child seat inadvertently when the vehicle seat is located at the forward position.

Still preferably, the fixing portion is upwardly movable to an operative position connectable with the fixed portion of the child seat on the vehicle seat in association of a rearward movement of the vehicle seat to its rear position and the fixing portion is downwardly movable to an inoperative position lower than the operative position in association with a forward movement of the vehicle seat to its forward position.

With this feature, when the vehicle seat is set at the forward position, the fixing portion is set at its lower (non-operative) position. Therefore, the fixing portion will hardly interfere with a user's action of e.g. placing a baggage or the like. Moreover, this construction is advantageous also for restricting the possibility of damage to the fixing portion due to collision with a baggage or some vehicle component. Hence, the construction is advantageous for durability of the construction.

Further and other features and advantages of the invention will become apparent from the following detailed description of the preferred embodiments thereof with reference to the accompanying drawings.

### BRIEF DESCRIPTION OF THE DRAWINGS

Fig. 1 is a side view showing principal portions of a construction relating to the present invention including a rear vehicle seat, a child seat and a fixing portion, etc when the rear vehicle seat is set at its rear position,
Fig. 2 is an exploded perspective view showing the principal portions of the invention including the rear vehicle seat, the child seat and the fixing portion, etc. when the rear vehicle seat is set at its rear position,
Fig. 3 is a plan view showing a support frame for the vehicle rear seat and the fixing portion, etc. when the rear vehicle seat is set at its rear position,
Fig. 4 is a plan view showing a first rear frame member of the support frame, the fixing portion and a support member etc. when the rear vehicle seat is set at its rear position and right and left fixed portions of a base member are fixedly connected to the fixing portion,
Fig. 5 is a side view showing the first rear frame member of the support frame, the fixing portion and the support member with its vicinity in the course of a movement of the vehicle rear seat from the forward position to the rear position,
Fig. 6 is a side view corresponding to Fig. 5 when the rear vehicle seat is located at the rear position,
Fig. 7 a side view relating a further embodiment of the invention showing the first rear frame member of the support frame, the fixing portion and the support member with its vicinity in the course of a movement of the vehicle rear seat from the forward position to the rear position, and
Fig. 8 is a side view corresponding to Fig. 7 when the rear vehicle seat is located at the rear position.

### DESCRIPTION OF THE PREFERRED EMBODIMENTS

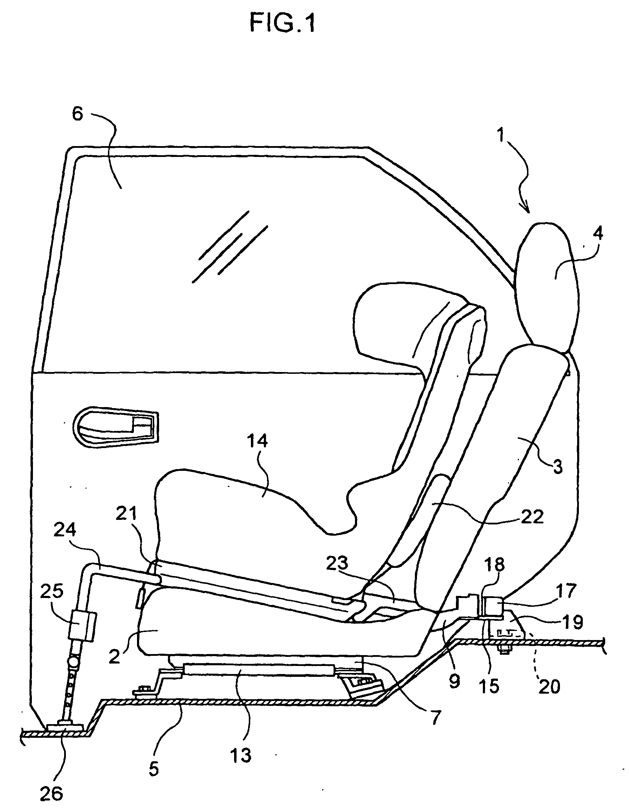

Fig. 1 shows an inside of a vehicle such as a passenger car, a commercial car, etc., having seats (front seats and rear seats 1). In particular, Fig. 1 shows the rear seat 1 and its vicinity and a child seat 14 supported on the rear seat 1. The rear seat 1 includes a seat portion 2, a backrest 3 and a headrest 4. The front seats are omitted from the view.

As shown also in Fig. 1, on a vehicle floor 5 adjacent a rear door 6, there are fixed slide rails 13, on which a support frame 7 having a rectangular shape in plan view is slidably mounted. With this, the rear seat 1 is movable in the forward and rear direction between a forward position and a rear position. Fig. 1 shows the rear seat 1 set at the rear position.

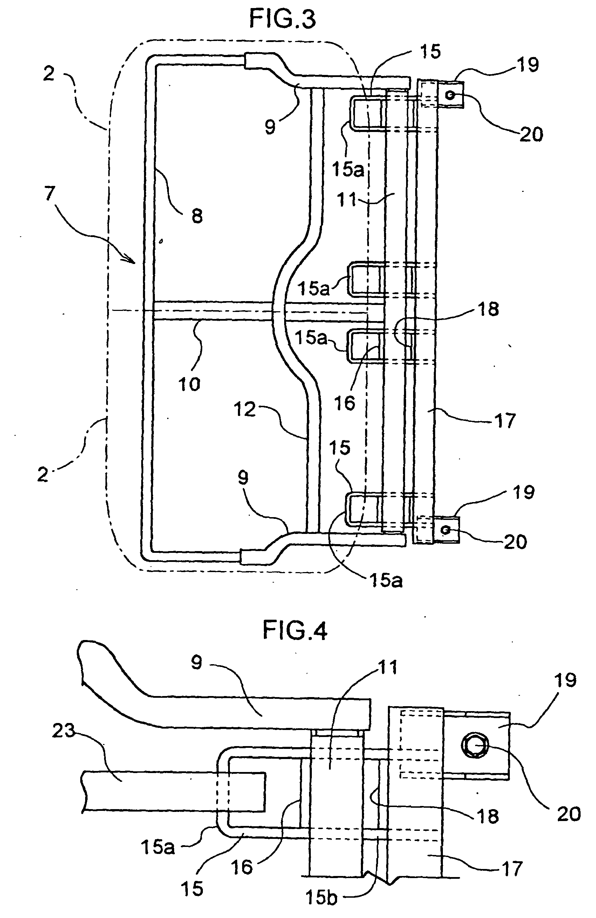

As shown in Fig. 3, the support frame 7 includes a front frame member 8 having a square-hooked shape in plan view, right and left lateral frame members 9, 9 connected to the rear of the front frame member 8, first and second rear frame members 11, 12 connected to and across the lateral frame members 9, 9, a vertical frame member 10 connecting between the front frame member 8 and the first rear frame member 11, and so on.

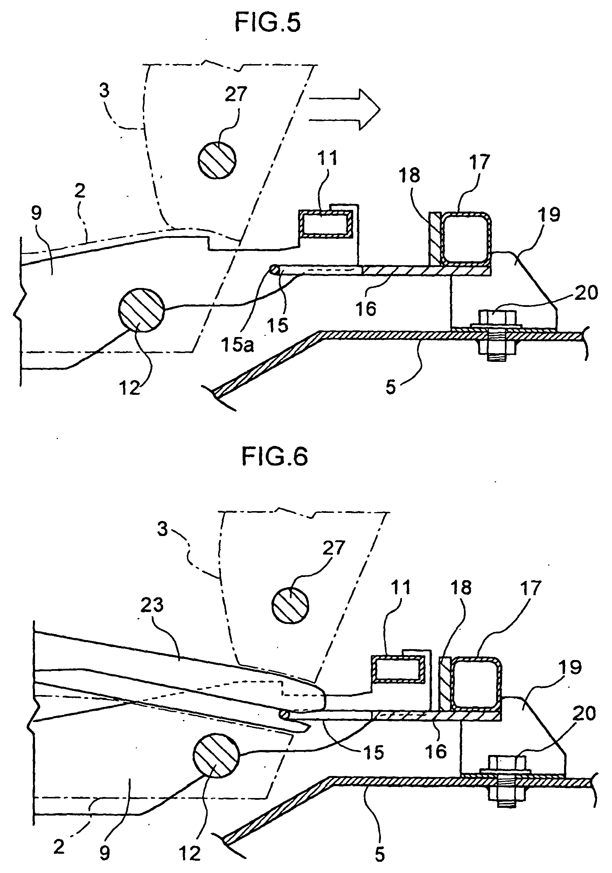

As shown in plan views of Fig. 3 and Fig. 4, toward the rear side of the vehicle (i.e. the right-hand side in Fig. 4), the rear portions of the right and left lateral frame members 9 extend respectively with a bent toward the inner side of the vehicle (the lower direction in the sheet plane of Fig. 4) relative to the front portions (connected to the front frame member 8) of the right and left lateral frame members 9, 9. At the same time, as shown in the side view of Fig. 6, toward the rear side of the vehicle, the rear portions of the right and left lateral frame members 9 extend respectively with an upward inclination relative to the front portions (connected to the front frame member 8) of the right and left lateral frame members 9, 9.

Next, there will be described fixing portions 15a provided on the floor 5 for allowing fixing of the child seat 14 as mounted on the rear seat 1.

First, as shown in Figs. 3, 4 and 5, there is provided a support member 17 in the form of a laterally elongate square pipe having a substantially same length as the entire width of the rear seat 1. And, this support member 17 is fixed by means of bolts 20 to the rear portion of the rear seat 1 on the vehicle floor 5 via support brackets 19 having a square-hooked shape in front view and welded to lower faces of opposed ends of the support member 17.

Next, base ends 15b of four square-hooked shape fixing members 15 each formed by bending a round bar in the square-hooked shape in plan view are fixed by welding to the lower side of the support member 17 and spaced apart from each other with a predetermined distance relative to each other. And, the fixing portion 15a is formed at the leading end of each of these square-hooked shape fixing members 15. And, a horizontal reinforcing plate 16 having a plate thickness substantially equal to the outer diameter of the fixing portion 15a is welded to the vicinity of the base end 15b of the fixing member 15. Further, to the front face of the support member 17 at the position of the horizontal reinforcing plate 16, a vertical reinforcing plate 18 is welded.

Accordingly, after the manufacture of the vehicle is finished (in other words, after mounting of the support frame 7 on the rear seat 1 to the vehicle floor 5), the support bracket 19 and the support member 17 (i.e. the fixing portion 15a) may be fixed to the vehicle floor 5 by means of the bolt 20. And, when needed, by loosening the bolt 20, the support bracket 19 and the support member 17 (i.e. the fixing portion 15a) can be dismounted from the vehicle floor 5.

Next, the child seat 14 will be described in details.

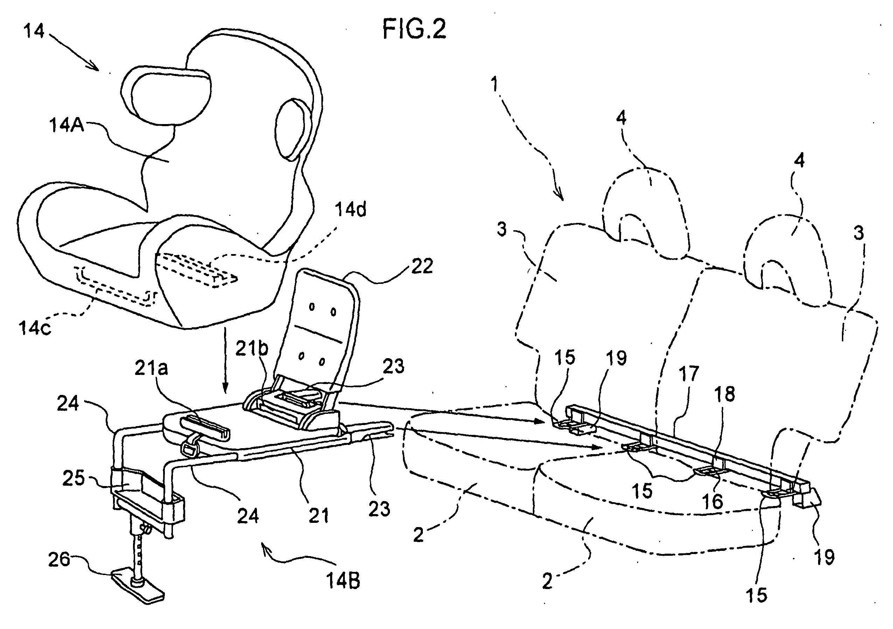

As shown in Figs. 1 and 2, the child seat 14 consists mainly of a child seat body 14A and a fixing-assist structure 14B.

The child seat body 14A forms, in its bottom a pair of connected portions 14c, 14d spaced apart from each other in the forward and rear direction.

Next, the fixing-assist structure 14B includes a flat-plate like base member 21 and a receiver plate 22. The base member 21 mounts, on the upper face thereof, a pair of connecting portions 21a, 21b. Then, by connecting the connected portions 14c, 14d of the child seat body 14A with the connecting portions 21a, 21b, respectively, the child seat body 14A and the fixing-assist structure 14B are connected together to form the child seat 14.

From the opposed rear ends of the base member 21, a pair of right and left fixed portions 23, 23 extend rearward to be engaged with the above-described fixing portions 15a. From the front portion of the base member 21, a pair of right and left front arms 24 extend forwardly to mount a footrest 25 at the forward ends. Further, downwardly of this footrest 25, there is provided a leg portion 26 which is adjustable in height.

Next, there will be described an operation for fixing the child seat 14 as resting on the rear seat 1.

First, as shown in Figs. 5 and 6, when the rear seat 1 is moved from the forward position to the rear position, the first rear frame member 11 of the support frame 7 passes over the fixing portion 15a and then is set in front of the support member 17.

With this operation, when the rear seat 1 is set at the rear position thereof, as shown in Figs. 3, 4 and 6, the first rear frame member 11 of the support frame 7 is located upwardly adjacent the fixing portion 15a and at the same time the member 11 is located forwardly adjacent the support member 17. And, the rear portions of the right and left lateral frame members 9 of the support frame 7 are located adjacent the four fixing portions 15a, respectively.

Also, with the above-described operation, when the rear seat 1 is set at the rear position, as shown in Fig. 6, the leading end of the fixing portion 15a is set at a position slightly advanced (forwardly) into the gap between the seat portion 2 and the backrest 3 of the rear seat 1. At the same time, the second rear-frame member 12 of the support frame 7 is set at a position obliquely forwardly and downwardly of the fixing portion 15a, and a horizontal frame member 27 inside the backrest 3 of the rear seat 1 is set at a position obliquely forwardly and upwardly of the fixing portion 15a.

Then, under this condition, as shown in Figs. 1, 4 and 6, the right and left fixed portions 23, 23 of the base member 21 are inserted between the seat portion 2 and the backrest 3 of the rear seat 1 and these fixed portions 23, 23 of the base member 21 are pressed into the right-hand or left-hand pair of fixing portions 15a, 15a, respectively. With this, claw elements (not shown) elastically projecting from upper positions to lower positions within the fixed portions 23, 23 are caused to ride over the fixing portions 15a, 15a, whereby the connection between the fixed portions 23, 23 and the fixing portions 15a, 15a is completed. Under this condition, the base member 21 of the child seat 14 is placed on the seat portion 2 of the rear seat 1 and the leg portion 26 is placed on the vehicle floor 5. Under this condition too, as shown in Figs. 4 and 6, the rear portions of the right and left lateral frames 9 of the support frame 7 are set laterally outwardly adjacent the right and left fixed portions 23 of the base member 21.

Further, as shown in Fig. 1, when the child seat 14 is fixed as mounted on the rear seat 1 (i.e. the condition of the rear seat 1 being set at the rear position thereof), the receiver plate 22 of the child seat 1 is placed in abutment against the backrest 3 of the rear seat 1, so that the rear seat 1 cannot be moved forwardly (to the left side in Fig. 1) from this rear position. Such forward (to the left side in Fig. 1) movement of the rear seat 1 from the rear portion is allowed only when the right and left fixed portions 23 of the base member 21 from the fixing portions 15 and then the child seat 14 is dismounted from the rear seat 1.

Conversely, when the rear seat 1 is moved forwardly (to the left side in Fig. 1) from the rear position, the gap between the seat portion 2 and the backrest 3 of the rear seat 1 is located significantly forwardly (to the left side in Fig. 1) away from the fixing portions 15a. Therefore, under this condition, even if the right and left fixed portions 23, 23 of the base member 21 are inserted between the seat portion 2 and the backrest 3 of the rear seat 1, these right and left fixed portions 23, 23 of the base member 21. cannot be connected to the fixing portions 15a.

Next, other embodiments of the invention will be described.

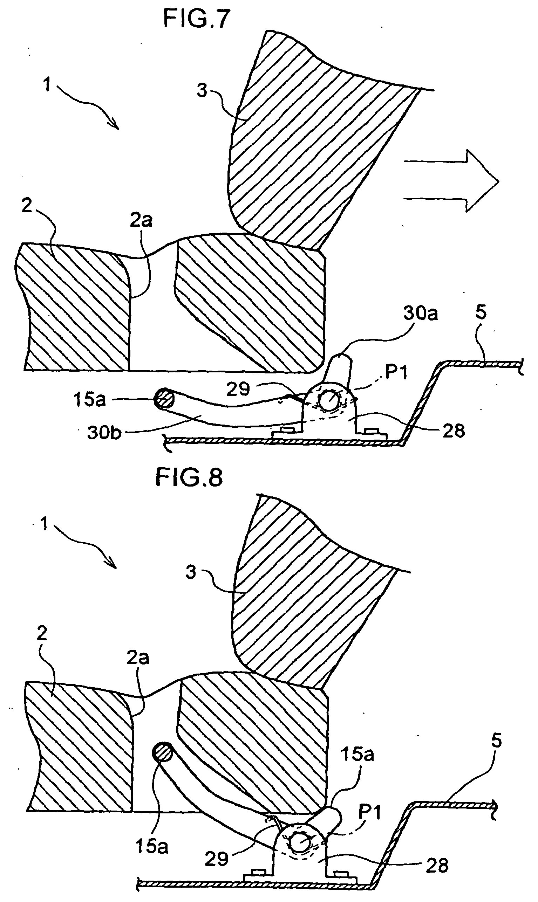

The support member 17 employed in the foregoing embodiment may be omitted. In this case, as shown in Fig. 7, a support bracket 28 is fixed to a portion of the vehicle floor 5 rearwardly of the rear seat 1 and there is provided a pivotal member 30 pivotable about a horizontal axis P1 of the support bracket 28. And, the fixing portion 15a may be provided at an end of this pivotal member 30.

More particularly, the pivotal member 30 includes a first arm 30a extending generally upwards from the horizontal axis P1 and a second arm 30b extending generally forwardly from the horizontal axis P1 and the fixing portion 15a is provided at the leading end of the second arm 30b. Also, there is provided a torsion coil type spring 29 for urging the second arm 30b downwards.

Then, in operation, as illustrated in Fig. 7, when the rear seat 1 is located at its forward or intermediate position, the pivotal member 30 is maintained, by the urging force of the spring 29, at an inoperative position in which the second arm 30b and the fixing portion 15a are laid flat over the vehicle floor 5. However, as illustrated in Fig. 8, when the rear seat 1 is moved from the forward position on the left side in the figure to the rear position on the right side of the same, the rear of the seat portion 2 of the rear seat 1 comes into abutment against a corresponding abutment portion of the first arm 30a, thereby to press the first arm 30a against the urging force of the spring 29 downwards toward the floor 5, so that the fixing portion 5a is raised to its upper operative position, at which the connection between the child seat 14 and the fixed portions 23 is possible. At the rear of the seat portion 2 of the rear seat 1, there are formed the fixing portions 15a set at the operative position and openings 2a capable of receiving the fixed portions 23 of the child seat 14.

In the above description, the constructions allow the connection between the fixed portions 23 of the child seat 14 to the fixing portions 15a only when the rear seat 1 is set at its rear position. Instead, for instance, by slightly displacing the positions of the support member 17 and the support bracket 28 shown in Figs. 1 and 7 to the forward side in the figures, it is also possible to modify the construction so that the construction allows the connection of the right and left fixed portions 23 of the base member 21 to the fixing portions 15 also when the rear seat 1 is located at a position slightly forwardly (to the left side in the figure) of the rear position. Moreover, the present invention can be applied not only to the rear seat 1, but also to the front seat (not shown).

Having described the presently preferred embodiments of the invention, it is to be understood that they may be embodied otherwise within the scope of the appended claims.

## Claims

1. A construction for fixing a child seat (14) to a vehicle having a seat (1) provided on a floor (5) of the vehicle, the construction comprising
a fixed portion (23) provided on the child seat; and
a fixing portion (15a) provided on the floor of the vehicle, the fixing portion (15a) being fixedly connectable with the fixed portion (23);
said seat (1) being supported to be slidable in a forward and rear direction between a forward position and a rear position;
**characterized in that**
the fixing portion (15a) is attached to a support member (17) fixed to the floor (5) continuously extending along the entire width of the seat (1),
and that the support member (17) is provided in a position which allows connection between the fixing portion (15a) and the fixed portion (23) of the child seat (14) placed on the seat (1) only when the seat (1) is slid to the rear position.

2. The construction according to claim 1,
**characterized in that**
the support member (17) has a square pipe-like shape.

3. The construction according to claim 1 or 2,
**characterized in that**
the support member (17) is detachably attachable to the vehicle floor.

4. The construction according to any one of claims 1 through 3,
**characterized in that**
the fixed portion (23) provided on the child seat (14) and the fixing portion (15) provided on the floor (5) extend along the sliding direction of the seat (1).

5. The construction according to any one of claims 1 through 4.
**characterized in that**
said seat (1) is a rear seat, and that a predetermined amount of space is secured forwardly of the fixed child seat (14) in association with a rearward movement of the seat (1) to its rear position.

6. The construction according to any one of claims 1 through 5,
**characterized by**
a restricting member for restricting a forward movement of the seat (1) from the rear position with the fixed portion (23) being connected to the fixing portion (15a).

7. The construction according to claim 6,
**characterized in that**
the restricting member includes a receiver plate (22) provided on the child seat (14) to contact a backrest (3) of the seat (1) with the fixed portion (23) being connected to the fixing portion.

## Patentansprüche

1. Eine Konstruktion zur Befestigung eines Kindersitzes (14) in einem Fahrzeug, das einen Sitz (1) auf einem Boden (5) des Fahrzeugs vorgesehen hat, wobei die Konstruktion umfasst:
einen befestigten Abschnitt (23), der an dem Kindersitz vorgesehen ist; und
einen Befestigungsabschnitt (15a), der auf dem Boden des Fahrzeugs vorgesehen ist, wobei der Befestigungsabschnitt (15a) fest verbindbar ist mit dem befestigten Abschnitt (23);
wobei der genannte Sitz (1) gehalten wird, um in einer Richtung nach vorne und nach hinten verschiebbar zu sein zwischen einer vorderen Stellung und einer hinteren Stellung;
**dadurch gekennzeichnet,**
**dass** der Befestigungsabschnitt (15a) an einem Stützelement (17) angebracht ist, das an dem Boden (5) befestigt ist und sich kontinuierlich über die gesamte Breite des Sitzes (1) erstreckt
und **dass** das Stützelement (17) in einer Stellung vorgesehen ist, die die Verbindung zwischen dem Befestigungsabschnitt (15a) und dem befestigten Abschnitt (23) des Kindersitzes (14), der auf dem Sitz (1) befestigt ist, nur erlaubt, wenn der Sitz (1) in die hintere Stellung geschoben ist.

2. Die Konstruktion gemäß Anspruch 1,
**dadurch gekennzeichnet,**
**dass** das Stützelement (17) eine quadratisch rohrartige Form hat.

3. Die Konstruktion gemäß Anspruch 1 oder 2,
**dadurch gekennzeichnet,**
**dass** das Stützelement (17) lösbar an dem Fahrzeugboden angebracht ist.

4. Die Konstruktion gemäß einem der Ansprüche 1 - 3,
**dadurch gekennzeichnet**,
das der befestigte Abschnitt (23), der an dem Kindersitz (14) vorgesehen ist, und der Befestigungsabschnitt (15), der an dem Boden (5) vorgesehen ist, sich entlang der Verschiebungsrichtung des Sitzes (1) erstrecken.

5. Die Konstruktion gemäß einem der Ansprüche 1 - 4,
**dadurch gekennzeichnet,**
**dass** der genannte Sitz (1) ein Rücksitz ist und
**dass** eine vorbestimmte Größe an Raum vor dem befestigten Kindersitz (14) gewährleistet ist zusammen mit einer rückwärtigen Bewegung des Sitzes (1) in seine hintere Stellung.

6. Die Konstruktion gemäß einem der Ansprüche 1 - 5,
**gekennzeichnet durch**
eine Beschränkungselement zum Beschränken einer Bewegung des Sitzes (1) aus der hinteren Stellung nach vorn, wenn der befestigte Abschnitt (23) mit dem Befestigungsabschnitt (15a) verbunden ist.

7. Die Konstruktion gemäß Anspruch 6,
**dadurch gekennzeichnet,**
**dass** das Beschränkungselement eine Aufnahmeplatte (22) enthält, die an dem Kindersitz (14) vorgesehen ist, um eine Rückenlehne (3) des Sitzes (1) zu berühren, wenn der befestigte Abschnitt (23) mit dem Befestigungsabschnitt verbunden ist.

## Revendications

1. Construction d'une fixation d'un siège d'enfant (14) sur un véhicule comportant un siège (1) disposé sur un plancher (5) du véhicule, la construction comprenant :
une partie fixe (23) prévue sur le siège d'enfant, et
une partie de fixation (15a) prévue sur le plancher du véhicule, la partie de fixation (15a) pouvant être raccordée de manière fixe à la partie fixe (23),
ledit siège (1) étant supporté pour pouvoir coulisser dans un sens vers l'avant et un sens vers l'arrière entre une position avant et une position arrière,
**caractérisée en ce que**
la partie de fixation (15a) est fixée sur un élément de support (17) fixé sur le plancher (5) s'étendant de manière continue sur la largeur entière du siège (1),
et **en ce que** l'élément de support (17) est disposé en une position qui permet un raccordement entre la partie de fixation (15a) et la partie fixée (23) du siège d'enfant (14) placé sur le siège (1) seulement lorsque le siège (1) est glissé à la position arrière.

2. Construction selon la revendication 1,
**caractérisée en ce que**
l'élément de support (17) présente une forme analogue à un tuyau carré.

3. Construction selon la revendication 1 ou 2,
**caractérisée en ce que**
l'élément de support (17) peut être fixé de manière séparable sur le plancher du véhicule.

4. Construction selon l'une quelconque des revendications 1 à 3,
**caractérisée en ce que**
la partie fixe (23) prévue sur le siège d'enfant (14) et la partie de fixation (15) prévue sur le plancher (5) s'étendent selon la direction de coulissement du siège (1).

5. Construction selon l'une quelconque des revendications 1 à 4,
**caractérisée**
**en ce que** ledit siège (1) est un siège arrière, et
**en ce qu'**une quantité prédéterminée d'espace est assurée à l'avant du siège d'enfant fixe (14) en association avec un déplacement vers l'arrière du siège (1) à sa position arrière.

6. Construction selon l'une quelconque des revendications 1 à 5,
**caractérisée par**
un élément de limitation destiné à limiter un mouvement vers l'avant du siège (1) depuis la position arrière, la partie fixe (23) étant raccordée à la partie de fixation (15a).

7. Construction selon la revendication 6,
**caractérisée en ce que**
l'élément de limitation comprend une platine de réception (22) prévue sur le siège d'enfant (14) pour être en contact avec le dossier (3) du siège (1), la partie fixe (23) étant raccordée à la partie de fixation.
